(19) Europäisches Patentamt
European Patent Office
Office européen des brevets

(11) **EP 0 568 884 B1**

(12) **EUROPÄISCHE PATENTSCHRIFT**

(45) Veröffentlichungstag und Bekanntmachung des Hinweises auf die Patenterteilung:
**17.03.1999 Patentblatt 1999/11**

(51) Int Cl.⁶: **H04N 3/30**, H04N 5/12

(21) Anmeldenummer: **93106684.9**

(22) Anmeldetag: **24.04.1993**

(54) **Vertikalablenkschaltung für einen Fernsehempfänger**

Vertical deflection circuit for a TV receiver

Circuit de balayage vertical pour un récepteur de télévision

(84) Benannte Vertragsstaaten:
**DE ES FR GB IT**

(30) Priorität: **04.05.1992 DE 4214338**

(43) Veröffentlichungstag der Anmeldung:
**10.11.1993 Patentblatt 1993/45**

(73) Patentinhaber: **DEUTSCHE THOMSON-BRANDT GMBH**
**78048 Villingen-Schwenningen (DE)**

(72) Erfinder: **Hirtz, Gangolf**
**D-78078 Niedereschach (DE)**

(56) Entgegenhaltungen:
**EP-A- 0 293 990**          WO-A-92/01354**

**Beschreibung**

Die Erfindung geht aus von einer Vertikalablenkschaltung gemäß dem Oberbegriff des Anspruchs 1. Übliche Ablenksysteme besitzen je eine Oszillatorschaltung für die Horizontal- sowie die Vertikalablenkung, die jeweils durch das Empfangssignal synchronisiert sind. Die Zeilenzahl je vertikale Ablenkperiode ist somit vom Empfangssignal unmittelbar vorgegeben und konstant.

Bei Systemen mit symmetrischer Horizontalablenkung, bei denen eine Zeile n von links nach rechts und die nächste Zeile n+1 von rechts nach links auf dem Bildschirm geschrieben wird, ist es bekannt, aus Gründen der Leistungseinsparung einen sinusförmigen Horizontalablenkstrom zu verwenden, dessen Periodendauer gleich der Dauer von zwei Zeilen ist. Derartige Schaltungen haben den Vorteil, daß die Horizontalablenkung als Resonanzschwingkreis ausgebildet werden kann. Die Anpassung des Videosignals an die Zeilendauer erfolgt dabei durch Zwischenspeicherung des empfangenen Videosignals. Die Resonanzfrequenz eines derartigen Schwingkreises unterliegt jedoch Schwankungen durch Temperaturdrift, Bauteilalterungen und Bauteilstreuungen. Es ist zwar möglich, die Resonanzfrequenz durch steuerbare Induktivitäten oder Kapazitäten zu stabilisieren. Das erfordert aber einen beträchtlichen Schaltungsaufwand. Außerdem führt eine phasenstarre Synchronisation des sinusförmigen Horizontalablenkstromes an das Empfangssignal leicht zu nicht tolerierbaren Störungen der Symmetrie von hin- und rücklaufendem Ablenksignal.

Es ist daher bekannt, einen absolut Freischwingenden, durch das Eingangssignal nicht synchronisierten Horizontalablenkkreis vorzusehen, dessen resonanzfrequenz lediglich im Bereich der halben Zeilenfrequenz des Empfangssignals liegt. Für die Resonanzfrequenz ergibt sich deshalb die Hälfte der Eingangszeilenfrequenz, da pro Periodendauer des Ablenksignals zwei Zeilen, eine in hinlaufender und eine in rücklaufender Richtung dargestellt werden. Dabei liegt diese Resonanzfrequenz vorzugsweise etwas höher, damit bei einer Verringerung der Resonanzfrequenz die halbe Horizontalfrequenz des Eingangssignals nicht oder nur wenig unterschritten wird.

Das Videosignal wird mit einem vom Eingangssignal abgeleiteten Takt in einen Speicher geschrieben und mit einem hierzu asynchronen Takt, der lediglich vom dem freischwingenden horizontalen Ablenksignal synchronisiert wird, wieder ausgelesen. Das Auslesen erfolgt in jeder zweiten Zeile in inverser Richtung. Bei einer derartigen Schaltung ist es erforderlich, die Vertikalablenkung an den Vertikalimpuls des Empfangssignals anzukoppeln, da ansonsten der Speicherbedarf sehr hoch oder unendlich werden kann.

Schaltungen mit symmetrischer Horizontalablenkung sind beispielsweise aus der EP 0 359 092 B1 und EP 0 293 990 A1 20 bekannt. Die in der EP 0 293 990 A1 beschriebene Ablenkschaltung enthält eine selbstschwingende Ablenkstufe, deren Frequenz durch ein Resonanznetzwerk bestimmt wird und unabhängig ist von der Frequenz des Zeilensynchronsignals des eingehenden Videosignals. In dieser Ablenkschaltung erzeugt die Vertikalablenkschaltung eine periodische Welle, die mit dem freischwingenden Horizontalablenksignal synchronisiert ist.

Der Erfindung liegt die Aufgabe zugrunde, eine Vertikalablenkschaltung für einen Fernsehempfänger zu schaffen, die ein möglichst geringes Speichervolumen für das Videosignal erfordert und für eine freischwingende, nicht synchronisierte Horizontalablenkschaltung besonders geeignen ist. Diese Aufgabe wird durch die im Anspruch 1 angegebene Erfindung gelöst. Vorteilhafte Weiterbildungen der Erfindung sind in den Unteransprüchen angegeben.

Die erfindungsgemäße Schaltung hat mehrere Vorteile. Zunächst wird sichergestellt, daß trotz der nicht synchronisierten Horizontalablenkung die Vertikalablenkperiode der Vertikalablenkschaltung im Mittel gleich der Vertikalperiode des Empfangssignals ist und somit die Anforderungen an die Speicherkapazität des Zwischenspeichers für das Videosignal nicht unerwünscht ansteigen. Die Zeilenzahl der Horizontalablenkschaltung ist zwar nicht gleich der Zeilenzahl des emfpangenen Signals, sondern vorzugsweise größer, z.B. im Bereich zwischen 625 und 635. Der Ausgleich der erhöhten, auch Schwankungen unterliegenden Zeilenzahl erfolgt dadurch, daß mehr oder weniger Zeilen am Ende der Vertikalperiode eingefügt werden, in denen allerdings keine Bilddarstellung erfolgt. Die aktive Zeilenzahl für das Schreiben des Bildes bleibt dabei konstant. Die Erfindung ist vorzugsweise anwendbar für eine symmetrische Ablenkung mit sinusförmigem Zeilenablenkstrom.

Die Erfindung wird im folgenden anhand der Zeichnung an einem Ausführungsbeispiel erläutert. Darin zeigen

Fig. 1 ein Blockschaltbild eines Fernsehempfängers mit der erfindungsgemäßen Vertikalablenkschaltung,

Fig. 2, 3 Kurven zur Erläuterung der Wirkungsweise der Schaltung nach Fig. 1 und

Fig. 4, 5 zwei Blockschaltbilder für die Horizontalablenkschaltung und die Vertikalablenkschaltung in einem Fernsehempfänger, in denen die Erfindung vorteilhaft anwendbar ist.

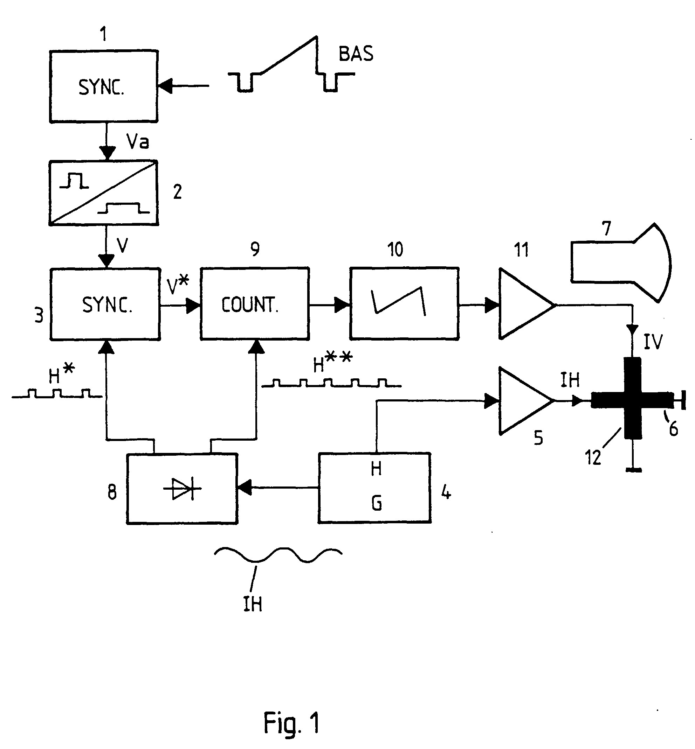

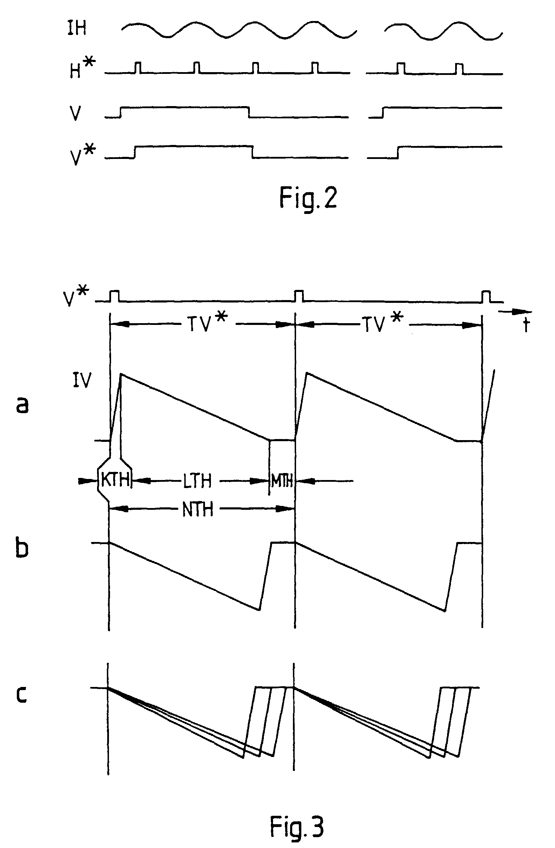

In Fig. 1 gelangt das BAS-Signal an die Synchronsignalabtrennstufe 1, die das abgetrennte Vertikalsynchronsignal Va liefert. Va gelangt an den Impulsformer 2, der den Vertikalimpuls V mit der Dauer von zwei Zeilen gemäß Fig. 2 erzeugt. V gelangt auf die Nachsynchronisierstufe 3.

Der freischwingende, vom Eingangssignal nicht synchronisierte Horizontaloszillator 4 steuert über die Endstufe 5 die Zeilenablenkspulen 6 für die Bildröhre 7 mit einem sinusförmigen Ablenkstrom IH.

Während einer Periode dieses Ablenksignals werden zwei Zeilen auf dem Bildschirm wiedergegeben. Der Ablenkstrom IH gelangt außerdem auf den Detektor 8, in dem aus dem Strom IH ein zum Ablenkstrom phasensychroner Horizontal impuls H* abgeleitet wird. Bei einer symmetrischen Ablenkung tritt der Impuls H* in jeder zweiten Zeile auf und liefert somit auch eine Information über die Ablenkrichtung. Der Impuls H* gelangt auf die Stufe 3 und bewirkt dort, daß der Vertikalimpuls V mit dem vom horizontalen Ablenksignal abgeleiteten Impuls V* synchronisiert wird, wodurch am Ausgang der Stufe 3 der nachsychronisierte Impuls V* gemäß Fig 2 entsteht. V* ist somit mit H* phasenstarr verkoppelt. Das Signal V ist etwas länger als eine Zeilendauer, damit es vom dem Impuls H* auch dann noch nachgetastet werden kann, wenn die Horizontalablenkfrequenz geringer als die Eingangsfrequenz ist. Im dargestellten Beispiel hat V* die Dauer von zwei Zeilen. Durch eine Erhöhung der Horizontalablenkfrequenz ist es möglich, daß das vom Eingangssignal abgeleitete Vertikalsignal mehrfach, z.B. dreimal nachgetastet wird und somit von einer zur nächsten Vertikalperiode sich unterschiedlich lange nachsynchronisierte Vertikalsignale V* ergeben. Daher ist es wichtig, daß für die weitere Signalverarbeitung lediglich die erste Flanke des nachsynchronisierten Vertikalsignals V* verwendet wird. Durch diese Nachsynchronisation ist sichergestellt, daß die Zeit zwischen zwei Vertikalimpulsen nun exakt ein gerades Vielfaches der Zeilendauer des Horizontalablenksignals ist.

Die dargestellten Symbole haben folgende Bedeutung:

$$T_V{}^* = N\,T_H{}^*$$

$T_H{}^*$:  Zeilendauer des Horizontalabenksignals

bzw.

$$T_V{}^* = N/2\,f_H{}^*$$

$f_H{}^*$:  Frequenz des Horizontalablenksignals
$T_V{}^*$:  Periodendauer des nachsynchronisierten Vertikalsignals

Es ist offensichtlich, daß die Periodendauer des nachsynchronisierten Vertikalsignals V* lediglich im Mittel gleich der Periodendauer des empfangenen Vertikalsignals ist. Durch die sich ändernde horizontale Ablenkfrequenz fH entsteht eine sich permanent ändernde Zeilenzahl N je Vertikalablenkperiode. Realisiert ist dies dadurch, daß das Vertikalsynchronisationssignal als Startimpuls für das vertikale Ablenksignal benutzt wird.

Dieses Vertikalablenksignal setzt sich zusammen aus einer konstanten Anzahl von Taktzyklen K für das Rücklaufsignal sowie einer konstanten Anzahl von Taktzyklen L für das hinlaufende Vertikalablenksignal. Nach Durchlauf dieser K + L Taktzyklen verbleibt das Ablenksignal zunächst in einer Warteposition. Erst nach erneutem Auftreten des Signals V* beginnt der Zyklus von neuem.

Als Variante kann der durch das vertikale Synchronisationssignal V* getriggerte Ablenkzyklus auch mit dem Hinlauf beginnen, wie in Fig. 2b dargestellt ist, und den Wartezyklus zwischen Rück- und Hinlauf einfügen. Denkbar sind auch Kombinationen dieser beiden Möglichkeiten.

Aufgrund der sich ändernden Horizontalfrequenz ergeben sich für den Hinlauf sowie den Rücklauf sich ändernde Ablenkzeiten. Dies hat zur Folge, daß die Gesamtzeilenzahl N und somit auch die Dauer des Wartezyklus von der horizontalen Ablenkfrequenz abhängig ist. Diese Schaltungsvariante garantiert, daß die Ablenkamplitude konstant bleibt, daß stets eine konstante Anzahl von Zeilen auf dem Bildschirm dargestellt wird und eine asynchrone Ankopplung des vertikalen Ablenksignals an das empfängerseitige Ablenksignal möglich ist, ohne daß Änderungen der horizontalen Ablenkfrequenz hierauf einen Einfluß nehmen.

Der Detektor 8 liefert außerdem den zeilfrequenten Horizontalimpuls H** für den Zähler 9, an dessen Rücksetzeingang der Vertikalimpuls V* angelegt ist. Der Takt H** für den Vertikalzähler 9 entspricht der eigentlichen Zeilenfrequenz des wiedergegebenen Signals

$$fH^{**} = 2fH^*.$$

Der Vertikalzähler 9 liest aus einem Speicher das eigentliche vertikale Ablensignal aus, wie es in Bild 3 dargestellt ist. Ist der Hin- und Rücklauf abgearbeitet, so zählt der Vertikalzähler 9 zunächst weiter. Das aus dem Speicher ausgelesene Vertikalsignal ändert sich nun jedoch nicht mehr und bleibt konstant, bis ein erneutes Auftreten des Rücksetzsignals V* diesen Zyklus wieder von vorne startet. Die Erzeugung des Vertikalablenksignals muß nicht zwangsweise mit einer Speichertabelle realisiert werden.

Die Ausgangspannung des Vertikal zählers 9 steuert die eigentliche Vertikalablenkschaltung, die Vertikalablenksignalschaltung 10, die über die Vertikalendstufe 11 den vertikalen Ablenkstrom IV in den Vertikalablenkspulen 12 erzeugt.

Die Schaltung ist ebenso anwendbar für eine übliche sägezahnförmige Ablenkung mit Rücklauf. Das ist z.B. dann erforderlich, wenn eine zum Eingangssignal asynchrone Horizontalablenkung verwendet wird. Das Synchronisationssignal H* wird dann von dem sägezahnförmigen Horizontalsignal abgeleitet und auch gleichzeitig zum Takten des Vertikalzählers verwendet.

Durch die Einfügung des zeitvariablen Wartezyklusses in das Vertikalablenksignal ist es möglich, die Amplitude des Vertikalablenksignals und somit die Bildhöhe konstant zu halten.

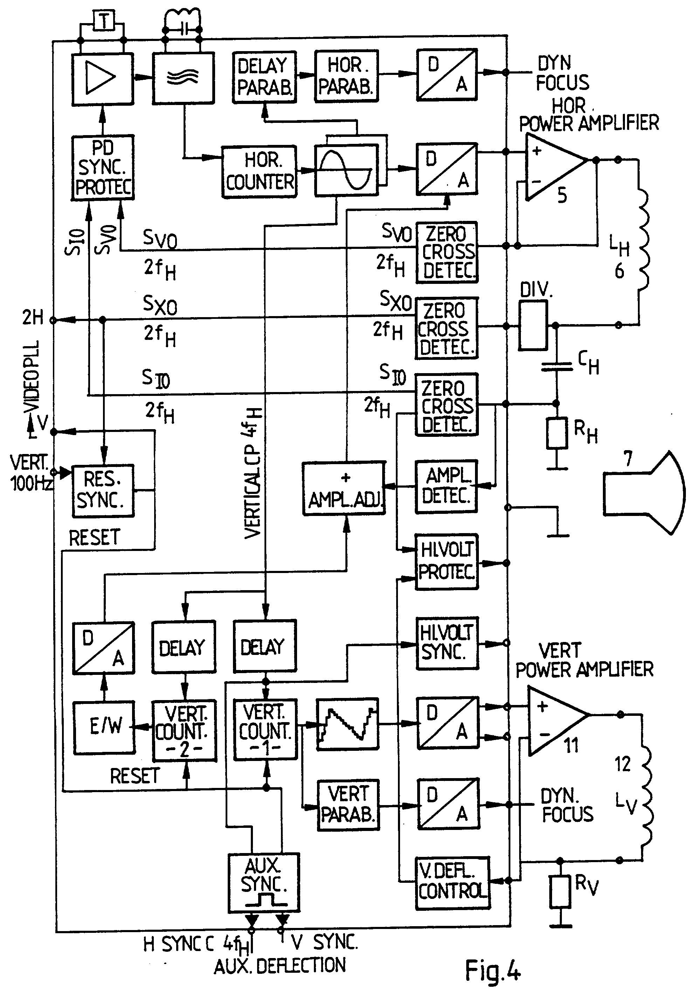

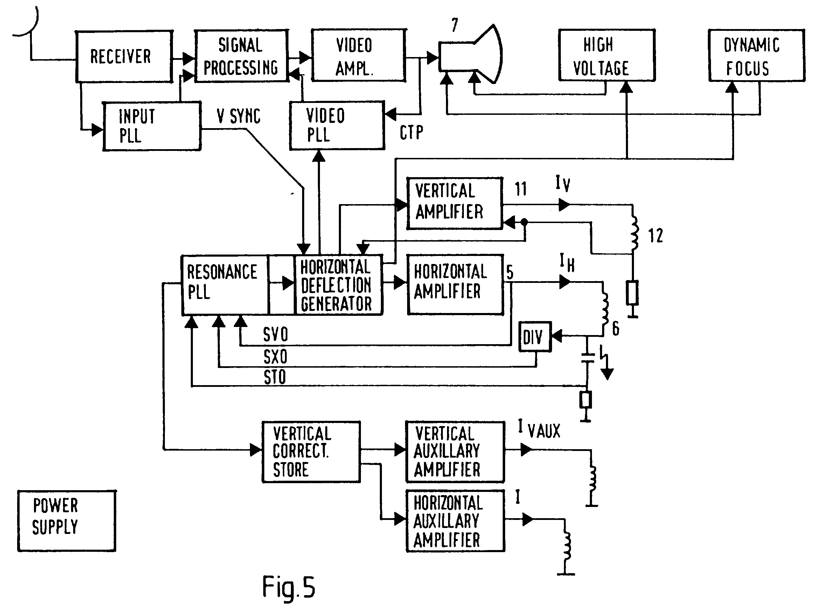

Die Figuren 4, 5 zeigen zwei vollständige Blockschaltbilder für die Horizontalablenkung und die Vertikalablenkung in einem Fernsehempfänger, die nach dem Prinzip gemäß Fig. 1 bis 3 arbeiten können. Darum sind Bauteile, die denen Fig. 1 entsprechen, mit gleichen Bezugsziffern versehen.

## Patentansprüche

1. Vertikalablenkschaltung für einen Fernsehempfänger, bei dem die vom empfangenen Signal (BAS) abgeleiteten Vertikalimpulse (V, Va) an einen Synchronisiereingang der Vertikalablenkschaltung angelegt sind und dessen Horizontalablenkschaltung (4) freischwingend und durch das Eingangssignal nicht synchronisiert ausgebildet ist, wobei die Zeilenzahl der Horizontalablenkschaltung größer ist als die des empfangenen Signals (BAS) und wobei aus dem Zeilenablenkstrom (IH) Horizontalimpulse (H*) abgeleitet sind, **dadurch gekennzeichnet**, daß an einen weiteren Synchronisiereingang der Vertikalablenkschaltung die Horizontalimpulse (H*) angelegt sind zur Erzeugung eines nachsynchronisierten Vertikalimpulses (V*), der mit dem ersten Horizontalimpuls (H*) nach der Flanke der vom empfangenen Signal (BAS) abgeleiteten Vertikalimpulse (V, Va) beginnt, und daß die Vertikalablenksignale jeweils mit einem nachsynchronisierten Vertikalimpuls (V*) beginnen und in einer Warteposition vor dem nächsten Vertikalimpuls enden, die bis zum Auftreten des nächsten nachsynchronisierten Vertikalimpulses (V*) gehalten wird und während der die Horizontalablenkschaltung weiterarbeitet.

2. Schaltung nach Anspruch 1, **dadurch gekennzeichnet**, daß die aus dem empfangenen Signal (BAS) abgetrennten Vertikalsynchronimpulse (Va) an einen Impulsformer (2) angelegt sind, der die Vertikalimpulse (V) mit der Dauer von mehr als einer Zeile erzeugt.

3. Schaltung nach Ansprüchen 1 oder 2, **dadurch gekennzeichnet**, daß die Vertikalimpulse (V) und die Horizontal impulse (H*) an die Eingänge einer Synchronisierstufe (3) angelegt sind, die die mit einer Flanke auf den Horizontalimpuls (H*) nachsynchronisierten Vertikalimpulse (V*) erzeugt.

4. Schaltung nach Anspruch 1, **dadurch gekennzeichnet**, daß ein Vertikalzähler (9) vorgesehen ist, an dessen Zähleingang zeilenfrequente Horizontalimpulse (H**) und an dessen Rücksetzeingang die nachsynchronisierten Vertikalimpulse (V*) angelegt sind, und dessen Ausgangsspannung zur Steuerung einer Vertikalablenksignalschaltung (10) dient.

5. Schaltung nach Anspruch 1, **dadurch gekennzeichnet**, daß die nachsynchronisierten Vertikalimpulse (V*) zur Auslösung des Hinlaufes der Vertikalablenkung dienen.

6. Schaltung nach Anspruch 1, **dadurch gekennzeichnet**, daß die nachsynchronisierten Vertikalimpulse (V*) zur Auslösung des Rücklaufes der Vertikalablenkung dienen.

7. Schaltung nach Anspruch 1, **dadurch gekennzeichnet**, daß die Horizontalablenkung nach dem Prinzip der symmetrischen Ablenkung mit einem sinusförmigen Ablenkstrom (IH) arbeitet, dessen Periodendauer gleich der Dauer von zwei Zeilen ist.

8. Schaltung nach Anspruch 6, **dadurch gekennzeichnet**, daß der nachsynchronisierte Vertikalimpuls (V*) das Ablenksignal an einer beliebigen Stelle der Vertikalperiode auslöst.

9. Schaltung nach Anspruch 1, **dadurch gekennzeichnet**, daß während der Warteposition Zeilen eingefügt werden, die keine Bilddarstellung enthalten.

## Claims

1. Vertical deflection circuit for a television receiver, wherein the vertical pulses (V, Va) derived from the received signal are applied to a synchronising input of the vertical deflection circuit, the horizontal deflection circuit (4) of said receiver being free-oscillating and not synchronised by the input signal, wherein the number of lines of the horizontal deflection circuit is higher than that of the received signal (BAS) and horizontal pulses (H*) are derived from the line deflection current (IH), characterised in that the horizontal pulses (H*) are supplied to a further synchronising input of the vertical deflection circuit for producing a resynchronised vertical impulse (V*) which starts together with the first horizontal pulse (H*) after the edge of the vertical pulses (V, Va) derived from the received signal, and in that the vertical deflection signals start together with each resynchronised vertical impulse (V*) and terminate within a waiting position before the next vertical pulse, wherein said waiting position is maintained up to the occurrence of the next resynchronised vertical pulse (V*) and the horizontal deflection circuit continues working during said waiting position.

2. Circuit according to claim 1, characterised in that the vertical synchronisation pulses (Va) separated from the received signal (BAS) are applied to a pulse shaper (2) which generates the vertical pulses (V) having the duration of more than one line.

3. Circuit according to claim 1 or 2, characterised in that the vertical pulses (V) and the horizontal pulses (H*) are applied to the inputs of a synchronisation stage (3) which generates vertical pulses (V*) which are resynchronised with one edge to the horizontal pulses (H*).

4. Circuit according to claim 1, characterised in that a vertical counter (9) is provided, to the counting input of which line-frequency horizontal pulses (H**) are applied, to the reset input of which the vertical pulses (V*) are applied, and the output voltage of which is used for controlling a vertical deflection signal circuit (10).

5. Circuit according to claim 1, characterised in that the vertical pulses (V*) are used for triggering the trace portion of the vertical deflection.

6. Circuit according to claim 1, characterised in that the resynchronised vertical pulses (V*) are used for triggering the flyback of the vertical deflection.

7. Circuit according to claim 1, characterised in that the horizontal deflection operates in accordance with the principle of symmetric deflection using a sinusoidal deflection current (IH), the period of which is equal to the duration of two lines.

8. Circuit according to Claim 6, characterised in that the resynchronised vertical pulse (V*) triggers the deflection signal at an arbitrary point in the vertical period.

9. Circuit according to claim 1, characterised in that during the waiting position lines are inserted which do not include any picture presentation.

**Revendications**

1. Circuit de balayage vertical pour un récepteur de télévision par lequel les impulsions verticales (V, Va) dérivées du signal reçu (signal composé vidéo) sont appliquées sur une entrée de synchronisation du circuit de balayage vertical et dont le circuit de balayage horizontal (4) à oscillation libre n'est pas synchronisé sur le signal d'entrée, où le nombre de lignes du circuit de balayage horizontal est plus élevé que celui du signal reçu (signal composé vidéo) et où les impulsions horizontales (H*) sont dérivées du courant de dérivation de ligne (IH), **caractérisé en ce que** :

les impulsions horizontales (H*) sont appliquées à une autre entrée de synchronisation du circuit de balayage vertical pour générer une impulsion verticale postsynchronisée (V*) qui démarre avec la première impulsion horizontale (H*) après le flanc de l'impulsion verticale (V, Va) dérivée du signal reçu (signal composé vidéo),

les signaux de balayage vertical démarrent toujours avec une impulsion verticale postsynchronisée (V*) et passent en position d'attente avant l'impulsion verticale suivante. Ils sont maintenus dans cette position jusqu'à l'arrivée de l'impulsion verticale postsynchronisée (V*) suivante et pendant cette période le circuit de balayage horizontal continue à fonctionner.

2. Circuit selon la revendication 1, **caractérisé en ce que** l'impulsion de synchronisation verticale (Va) séparée du signal reçu (signal composé vidéo) est transmise à un transformateur d'impulsions (2) qui génère l'impulsion verticale (V) sur une durée de plusieurs lignes.

3. Circuit selon les revendications 1 et 2, **caractérisé en ce que** l'impulsion verticale (V) et l'impulsion horizontale (H*) sont appliquées aux entrées d'un étage de synchronisation (3) qui génère l'impulsion verticale postsynchronisée (V*) avec un flanc de l'impulsion horizontale (H*).

4. Circuit selon la revendication 1, **caractérisé en ce qu'**il existe un compteur vertical (9). Une impulsion horizontale à fréquence de ligne (H**) est appliquée à l'entrée de comptage de ce compteur et une impulsion verticale postsynchronisée (V*) est appliquée à son entrée de réinitialisation. De plus, la tension de sortie du compteur est utilisée pour le contrôle du circuit de signal de balayage vertical (10).

5. Circuit selon la revendication 1, **caractérisé en ce que** les impulsions verticales postsynchronisées (V*) sont utilisées pour déclencher le démarrage du balayage vertical.

6. Circuit selon la revendication 1, **caractérisé en ce que** les impulsions verticales postsynchronisées (V*) sont utilisées pour déclencher le retour du balayage vertical.

7. Circuit selon la revendication 1, **caractérisé en ce que** le balayage horizontal fonctionne selon le principe du balayage symétrique avec un courant de balayage sinusoïdal (IH), dont la durée de période correspond à la durée de deux lignes.

8. Circuit selon la revendication 6, **caractérisé en ce que** l'impulsion verticale postsynchronisée (V*) déclenche le signal de balayage en un point arbitraire de la période verticale.

9. Circuit selon la revendication 1, **caractérisé en ce que** des lignes ne contenant aucune représentation sont ajoutées lors de la position d'attente.

Fig. 1

IH

H*

V

V*

## Fig.2

V*

TV*   TV*   t

IV

a

KTH   LTH   MTH

NTH

b

c

## Fig.3

Fig.4

Fig.5